# EUROPÄISCHE PATENTSCHRIFT

(11) **EP 2 528 765 B1**
(45) Veröffentlichungstag und Bekanntmachung des Hinweises auf die Patenterteilung: **30.11.2016**
(21) Anmeldenummer: 10796085.8
(22) Anmeldetag: 29.12.2010
(51) Int. Cl.: B60K 31/00, G01S 7/03, G01S 15/93, G08G 1/16, B60W 40/04

(54) **FAHRERASSISTENZVERFAHREN ZUR DETEKTION VON SEITLICHEN OBJEKTEN**
DRIVER'S ASSISTANCE METHOD TO DETECT LATERAL OBJECTS
MÉTODE D'ASSISTANCE AU CONDUCTEUR POUR DÉTECTER DES OBJETS LATÉRAUX

(30) Priorität: 27.01.2010 DE 102010001258
(43) Veröffentlichungstag der Anmeldung: 05.12.2012
(73) Patentinhaber: Robert Bosch GmbH, 70442 Stuttgart (DE)
(72) Erfinder: SCHNEIDER, Marcus, 71642 Ludwigsburg (DE)
(86) Internationale Anmeldenummer: PCT/EP2010/070846
(87) Internationale Veröffentlichungsnummer: WO 2011/091934

(56) Entgegenhaltungen:
- DE-A1-102006 047 634
- US-A1- 2002 067 287

## Beschreibung

Die vorliegende Erfindung betrifft ein Fahrerassistenzverfahren für ein Fahrzeug, insbesondere ein Kraftfahrzeug.

### Stand der Technik

Fahrerassistenzverfahren und -systeme für Fahrzeuge analysieren die Umgebung beziehungsweise Fahrsituation des Fahrzeugs und unterstützen den Fahrer des Fahrzeugs aktiv oder passiv beim Fahren des Fahrzeugs. Derartige Fahrerassistenzverfahren und/oder -systeme werden zum Beispiel in den Druckschriften DE 102006047634 A1, US 2002/067287 A1, WO 2007/036395 A1, US 5,689,264, US 2005/0195071 A1 und US 7,397,351 B1 beschrieben.

Bei Abbiegemanövern mit einem Fahrzeug um ein Objekt, beispielsweise eine Wand, ein anderes Fahrzeug oder einen Pfosten, in einer Engstelle, beispielsweise in einem Parkhaus, kann das Fahrzeug das Objekt streifen. Dabei streift das Fahrzeug das Objekt meist mit dem hinteren Fahrzeugbereich, beispielsweise dem hinteren Kotflügel. Der Grund hierfür ist der, dass der Kurvenradius der gelenkten Vorderräder größerer ist als der Kurvenradius der Hinterräder.

Hilfreich wäre daher, wenn der Seitenbereich des Fahrzeugs überwacht werden könnte und durch Ausgabe eines Warnhinweises an den Fahrer des Fahrzeugs eine Kollision verhindert werden könnte.

Problematisch sind jedoch bewegliche Objekte, wie Gegenverkehr, überholender Verkehr oder Personen. Diese können als relevante Objekte erkannt werden, sind jedoch gegebenenfalls bis zur Ausführung des Abbiegemanövers nicht mehr an der detektierten Position, so dass grundlos eine drohende Kollision angenommen wird.

### Offenbarung der Erfindung

Gegenstand der vorliegenden Erfindung ist ein Fahrerassistenzverfahren für ein Fahrzeug, insbesondere Kraftfahrzeug, mit einer Sensoranordnung, umfassend mindestens einen ersten und einen zweiten, einen Detektionsraum seitlich des Fahrzeugs erfassenden, abstandsmessenden Sensor zur Detektion von seitlichen Objekten, wobei der erste und der zweite Sensor in Fahrtrichtung hintereinander an einer Seiten des Fahrzeugs angeordneten sind, wobei ein Sensor im vorderen Bereich und ein Sensor im hinteren Bereich des Fahrzeugs angeordnet ist, umfassend die Verfahrensschritte
a) Detektieren eines (seitlichen) Objektes durch den ersten Sensor,
b) Detektieren des(selben) (seitlichen) Objektes durch den zweiten Sensor,
c) Überprüfen, ob das(selbe) Objekt den Detektionsraum des zweiten Sensors wieder verlassen hat,
d1) Verwerfen der, von dem ersten und zweiten Sensor gemessenen Abstandsdaten, insofern das(selbe) Objekt den Detektionsraum des zweiten Sensors wieder verlassen hat, oder
d2) Bestimmen der Position des(selben) Objektes aus gemessenen Abstandsdaten, insofern das(selbe) Objekt den Detektionsraum des zweiten Sensors nicht wieder verlassen hat.

Durch das erfindungsgemäße Verfahren können vorteilhafterweise unnötige Kollisionswarnungen aufgrund von Gegenverkehr oder überholendem Verkehr verhindert werden. Dadurch wird der Fahrer nicht irritiert, wodurch beispielsweise bei einem Abbiegemanöver auf einer stark befahrenen Straße Gefahren vermieden werden können.

Ob im Rahmen des erfindungsgemäßen Verfahrens ein Sensor als erster oder zweiter Sensor bezeichnet wird, hängt dabei davon ab, ob sich das Objekt zunächst dem vorderen Bereich oder zunächst dem hinteren Bereich des Fahrzeugs nähert. Bei der Detektion von Gegenverkehr kann beispielsweise der vordere Sensor der erste Sensor und der hintere Sensor der zweite Sensor sein. Bei überholendem Verkehr und/oder beim Rückwärtsfahren des Fahrzeugs kann hingegen der hintere Sensor der erste Sensor und der vordere Sensor der zweite Sensor sein.

Im Rahmen einer Ausführungsform des Verfahrens umfasst das Verfahren nach dem Verfahrensschritt a) und/oder b) den Verfahrensschritt:
c0) Speichern der von dem ersten Sensor und/oder dem zweiten Sensor gemessenen Abstandsdaten,
wobei die gespeicherten Abstandsdaten entweder in Verfahrensschritt d1) wieder gelöscht werden, oder in Verfahrens d2) zumindest teilweise zur Bestimmung der Position des Objektes verwendet werden.

Im Rahmen einer weiteren Ausführungsform des Verfahrens wird in Verfahrensschritt d2) die Position des Objekts aus Abstandsdaten bestimmt, welche während des Vorbeifahrens des Fahrzeugs an dem Objekt mit einem der Sensoren, insbesondere dem ersten Sensor, gemessenen wurden und/oder welche während des Stillstands oder des Vorbeifahrens des Fahrzeugs an dem Objekt von dem ersten und dem zweiten Sensor gemessen wurden.

Im Rahmen einer weiteren Ausführungsform des Verfahrens wird in Verfahrensschritt d2) die Position des Objektes anhand des zeitlichen Verlaufs der, von dem ersten und/oder zweiten Sensor, insbesondere von dem ersten Sensor, gemessenen Abstandswerte bestimmt wird.

Im Rahmen einer weiteren Ausführungsform des Verfahrens wird in Verfahrensschritt d2) weiterhin die relative Geschwindigkeit des Objektes zu dem Fahrzeug aus dem Verhältnis von dem Abstand zwischen dem ersten und zweiten Sensor zu der Zeitdifferenz zwischen dem Zeitpunkt, an dem ein minimaler Abstand zum ersten Sensor detektiert wurde, und dem Zeitpunkt, an dem ein minimaler Abstand zum zweiten Sensor detektiert wurde, bestimmt.

Erfindungsgemäß umfasst das Verfahren nach dem Verfahrensschritt d2) den Verfahrensschritt:
e) Speichern der in Verfahrensschritt d2) bestimmten Position des Objektes und/oder der in Verfahrensschritt d2) bestimmten relativen Geschwindigkeit des Objektes.

Dabei kann die in Verfahrensschritt d2) bestimmte Position des Objektes in Verfahrensschritt e) nicht gespeichert oder wieder gelöscht werden, insofern die in Verfahrensschritt d2) bestimmte relative Geschwindigkeit des Objektes zu dem Fahrzeug größer als die Geschwindigkeit des Fahrzeugs selbst ist und keine Kollision zu erwarten ist. Die in Verfahrensschritt d2) bestimmte Position des Objektes kann in Verfahrensschritt e) jedoch gespeichert oder nicht wieder gelöscht werden, insofern die in Verfahrensschritt d2) bestimmte relative Geschwindigkeit des Objektes zu dem Fahrzeug größer als die Geschwindigkeit des Fahrzeugs selbst ist und eine Kollision zu erwarten ist. Auf diese Weise kann die relative Geschwindigkeit des Objektes zu dem Fahrzeug in dem, im folgenden erläuterten Verfahrensschritt f) zusätzlich berücksichtigt werden. Die Geschwindigkeit des Fahrzeugs selbst kann gegebenenfalls auf der Basis der bestimmten relativen Geschwindigkeit des Objektes zu dem Fahrzeug geschätzt werden. Vorzugsweise wird jedoch eine von Einrichtungen des Fahrzeugs gelieferte und/oder gemessene Geschwindigkeit als Geschwindigkeit des Fahrzeugs verwendet.

Erfindungsgemäß umfasst das Verfahren nach dem Verfahrensschritt d2) oder e) den Verfahrensschritt:
f) Berechnen des Abstands des Fahrzeugs zu dem Objekt aus der in Verfahrensschritt e) gespeicherten Position des Objektes und/oder der relativen Geschwindigkeit des Objektes zu dem Fahrzeug und der Außenkontur des Fahrzeugs und der aktuellen Position des Fahrzeugs und/oder der aktuellen Trajektorie des Fahrzeugs.

Erfindungsgemäß umfasst das Verfahren nach dem Verfahrensschritt f) den Verfahrensschritt:
g) Ausgeben eine Kollisionswarnung an den Fahrer und/oder
   Ausgeben eines Fahrhinweises zur Kollisionsvermeidung an den Fahrer und/oder
   Automatisches Ändern und/oder Unterbrechen der Fahrzeugbewegung zur Kollisionsvermeidung,
insofern der in Verfahrensschritt f) berechnete Abstand einen Minimalwert (dₘᵢₙ) unterschreitet.

Die Kollisionswarnung beziehungsweise der Fahrhinweis kann beispielsweise akustisch und/oder visuell und/oder haptisch ausgegeben werden. Zum Beispiel kann durch einen Lautsprecher ein Ton, insbesondere Piepton, ausgegeben werden, dessen Lautstärke sich in Abhängigkeit vom Abstand erhöht und/oder dessen Höhe sich in Abhängigkeit vom Abstand erhöht und/oder dessen Wiederholungsintervall sich Abhängigkeit vom Abstand verkürzt.

Eine automatische Änderung beziehungsweise Unterbrechung der Fahrzeugbewegung, kann beispielsweise dadurch erfolgen, dass das Fahrzeug automatisch bremst und/oder automatisch lenkt um eine Kollision zu vermeiden. Dabei kann unter "automatisch" verstanden werden, dass die Änderung beziehungsweise Unterbrechung der Fahrzeugbewegung durch ein Steuergerät des Fahrzeugs und nicht durch den Fahrer des Fahrzeugs initiiert wird.

Es ist möglich, dass Verfahren mit einer Sensoranordnung durchzuführen, die nur auf einer Seite Sensoren aufweist. Bei einem Fahrzeug für den Rechtsverkehr sind die Sensoren vorzugsweise auf der linken Seite des Fahrzeugs und bei einem Fahrzeug für den Linksverkehr auf der rechten Seite des Fahrzeugs angeordnet. Da beispielsweise beim Rechtsabbiegen, beim Wiedereinscheren und Parken im Rechtsverkehr, jedoch auch bewegliche Objekte auf der rechten Seite des Fahrzeugs relevant sein können weist die Sensoranordnung vorzugsweise auf beiden Seiten des Fahrzeugs mindestens einen ersten und einen zweiten Sensor auf.

Im Rahmen einer weiteren Ausführungsform des Verfahrens umfasst daher die Sensoranordnung mindestens einen weiteren ersten und einen weiteren zweiten, einen Detektionsraum seitlich des Fahrzeugs erfassenden, abstandsmessenden Sensor zur Detektion von seitlichen Objekten, wobei der weitere erste und der weiter zweite Sensor spiegelbildlich zu dem ersten beziehungsweise zweiten Sensor an der anderen Seiten des Fahrzeugs angeordneten ist.

Im Rahmen der Erfindung kann unter dem "vorderen Bereich des Fahrzeugs" beziehungsweise unter dem "hinteren Bereich des Fahrzeugs" insbesondere der komplette Bereich vor beziehungsweise hinter der Mitte des Fahrzeugs, bezogen auf die Vorwärtsfahrrichtung des Fahrzeugs, verstanden werden. Beispielsweise können die Sensoren auf Höhe der vorderen und hinteren Fahrzeugtüren und/oder der vorderen und hinteren Fahrzeugräder angeordnet sein.

Vorzugsweise ist jedoch einer der Sensoren innerhalb eines Bereichs von > 0 % bis ≤ 25 %, beispielsweise von ≥ 1 % bis ≤ 15 %, der gesamten Fahrzeuglänge, gemessen von der vordersten Stelle des Fahrzeugs in Vorwärtsfahrrichtung, und ein anderer Sensor innerhalb eines Bereichs von ≥ 75 % bis < 100 %, beispielsweise von ≥ 85 % bis ≤ 99 %, der gesamten Fahrzeuglänge, gemessen von der vordersten Stelle des Fahrzeugs in Vorwärtsfahrrichtung, angeordnet. Beispielsweise können die Sensoren in seitlichen Bereichen eines Frontstoßfängers und in seitlichen Bereichen eines Heckstoßfängers angeordnet sein.

Die Sensoren können zum Beispiel Ultraschallsensoren, Infrarotsensoren, Radarsensoren, optische Sensoren oder elektrische Feldsensoren sein.

Im Rahmen einer weiteren Ausführungsform des Verfahrens sind die Sensoren jedoch Ultraschallsensoren.

Das Fahrerassistenzverfahren kann zum Beispiel ein Kollisionswarnverfahren, ein Kollisionsvermeidungsverfahren, ein Fahrkontrollverfahren, ein Automatiklenkverfahren und/oder ein Automatikbremsverfahren, insbesondere ein Abbiegassistenzverfahren, Parkassistenzverfahren, beispielsweise ein Einpark- und/oder Ausparkassistenzverfahren, ein Überholassistenzverfahren und/oder ein Toter-Winkel-Überwachungsverfahren sein.

Beispielsweise kann das Fahrerassistenzverfahren bei einem Kollisionswarnsystem, einem Kollisionsvermeidungssystem, einem Fahrkontrollsystem, einem Automatiklenksystem und/oder einem Automatikbremssystem, insbesondere einem Abbiegassistenzsystem, Parkassistenzsystem, beispielsweise einem Einpark- und/oder Ausparkassistenzsystem, einem Überholassistenzsystem und/oder einem Toter-Winkel-Überwachungssystem angewendet werden.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Ansicht eines Fahrzeugs mit zwei auf einer Seite des Fahrzeugs angeordneten Sensoren, dem ein anderes Fahrzeug entgegen kommt;
- Fig. 2: eine schematische Ansicht eines Fahrzeugs mit zwei auf der einen Seite des Fahrzeugs angeordneten Sensoren und zwei spiegelbildlich dazu auf der anderen Seite des Fahrzeugs angeordneten Sensoren, welches von einem anderen Fahrzeug überholt wird; und
- Fig. 3: einen Graphen zur schematischen Veranschaulichung des zeitlichen Verlaufs der Abstandswerte, welche von zwei Sensor des Fahrzeugs aus Fig. 1 oder 2 gemessen wurden.

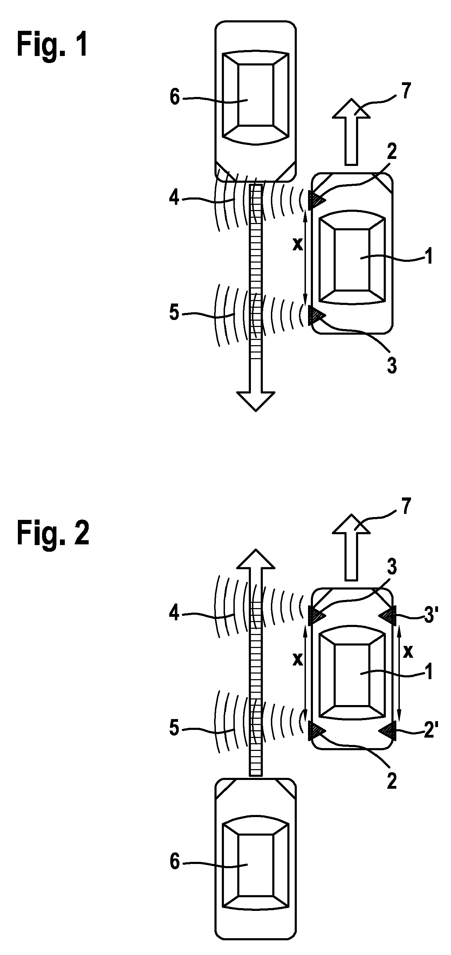

Figur 1 zeigt ein Fahrzeug 1, welches eine Sensoranordnung 2,3 mit einem ersten 2 und einem zweiten 3, einen Detektionsraum 4,5 seitlich des Fahrzeugs 1 erfassenden, abstandsmessenden Sensor zur Detektion von seitlichen Objekten 6 umfasst. Dabei sind der erste 2 und der zweite 3 Sensor in Fahrtrichtung 7 hintereinander an einer Seiten des Fahrzeugs 1 angeordneten sind, wobei ein Sensor 2 im vorderen Bereich und ein Sensor 3 im hinteren Bereich des Fahrzeugs 1 angeordnet ist. Figur 1 zeigt, dass dem Fahrzeug 1 ein anderes Fahrzeug 6 als Gegenverkehr entgegen kommt. Daher detektiert der vordere Sensor 2 das andere Fahrzeug 6 zuerst und wird daher als erster Sensor 2 bezeichnet. Der hintere Sensor 3 detektiert das andere Fahrzeug 6 erst nach dem vorderen, ersten Sensor 2 und wird daher als zweiter Sensor bezeichnet. Figur 1 zeigt weiterhin, dass die Sensoren 2,3 auf Höhe der Fahrzeugräder angeordnet sind.

Wenn man mit einem derartigen Fahrzeug 1 beim Abbiegen einem Objekt 5 zu Nahe kommt, so kann dessen Position von den seitlichen Sensoren 2,3 erkannt und der Fahrer gewarnt werden. Dazu ist während der Vorbeifahrt des Fahrzeugs 1 an dem Objekt 6 nur ein seitlicher Sensor 2 notwendig. Die Position des Objekts 6 kann anschließend in Beziehung zu der aktuell gefahrenen Fahrzeugposition und Fahrzeugtrajektorie gesetzt werden und von einem Steuergerät in einer "digitalen Umgebungskarte" abgelegt werden. Bei einer daran anschließende Bewegung des Fahrzeugs 1 kann kontinuierlich der Abstand des Fahrzeugs zu dem Objekt 6 berechnet werden. Wenn der berechnete Abstand kleiner als ein Mindestabstand (dₘᵢₙ) ist kann eine Kollisionswarnung und/oder eines kollisionsvermeidenden Fahrhinweises an den Fahrer ausgegeben und/oder die Fahrzeugbewegung zur Kollisionsvermeidung automatische geändert und/oder unterbrochen werden. Dies hat den Vorteil, dass das Objekt, wenn es einmal erfasst und in der Umgebungskarte hinterlegt wurde, nicht mehr erneut detektiert werden muss, da sich seine Position im Folgenden ohne zusätzliche Messdaten berechnen lässt.

Im Fall von Gegenverkehr oder überholendem Verkehr wird das bewegte Objekt vorteilhafterweise zuerst von dem ersten Sensor 2 und kurze Zeit später von dem zweiten Sensor 3 erfasst und entfernt sich nach der Erfassung zuerst von dem Detektionsraum 4 des ersten Sensors 2 und dann von dem Detektionsraum 5 des zweiten Sensors 3. Aufgrund dieses Verhaltens kann Gegenverkehr und überholender Verkehr als solcher erkannt und dessen Position gegebenenfalls nicht in die elektronische Umgebungskarte übernommen beziehungsweise aus der elektronischen Umgebungskarte wieder gelöscht werden. Zudem kann die Geschwindigkeit des Gegenverkehrs oder überholenden Verkehrs aus dem zeitlichen Abstand zwischen der Detektion beziehungsweise Nichtdetektion durch den ersten 2 und zweiten 3 Sensor die Geschwindigkeit des Objekts 6 geschätzt oder sogar berechnet werden.

Erfindungsgemäß wird daher überprüft, ob das Objekt 6 den Detektionsraum 5 des zweiten Sensors 3 verlassen hat. Insofern das Objekt 6 den Detektionsraum 5 des zweiten Sensors 3 verlassen hat, werden die, von dem ersten 2 und zweiten 3 Sensor gemessenen Abstandsdaten wieder verworfen. So kann vorteilhafterweise eine unnötige Kollisionswarnung vermieden werden. Insofern das Objekt 6 den Detektionsraum 5 des zweiten Sensors 3 nicht wieder verlassen hat, wird hingegen die Position des Objektes 6 aus gemessenen Abstandsdaten bestimmt und für eine spätere Weiterverarbeitung, insbesondere das Berechnen des Abstands des Fahrzeugs 1 zu dem Objekt 6 und zum Ausgeben eine Kollisionswarnung und/oder eines kollisionsvermeidenden Fahrhinweises an den Fahrer und/oder zum automatisches Ändern und/oder Unterbrechen der Fahrzeugbewegung zur Kollisionsvermeidung, beispielsweise in einer elektronischen Umgebungskarte, zur Verfügung gestellt.

Figur 2 zeigt ein Fahrzeug 1, dessen Sensoranordnung 2,3,2',3' neben dem ersten 2 und zweiten 3 Sensor auf der einen Fahrzeugseite, auf der anderen Fahrzeugseite noch einen weiteren ersten 2' und einen weiteren zweiten 3' Sensor, einen Detektionsraum 4',5' seitlich des Fahrzeugs 1 erfassenden, abstandsmessenden Sensor zur Detektion von seitlichen Objekten 6 umfasst. Dabei ist der weitere erste 2' und der weiter zweite 3' Sensor spiegelbildlich zu dem ersten 2 beziehungsweise zweiten 3 Sensor angeordnet. Figur 2 zeigt weiterhin, dass das Fahrzeug 1 von einem anderen Fahrzeug 6 überholt wird. Daher wird in diesem Fall der hintere Sensor als erster Sensor 2 und der vordere Sensor als zweiter Sensor bezeichnet.

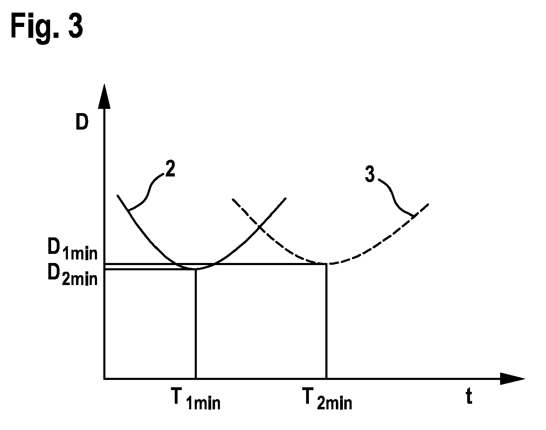

Figur 3 veranschaulicht den schematischen, zeitlichen Verlauf der Abstandswerte, welche von dem ersten 2 und zweiten 3 Sensor des Fahrzeugs 1 aus Figur 1 beziehungsweise 2 gemessen wurden. Figur 3 zeigt, dass bei einer konstanten Geschwindigkeit der beiden Fahrzeuge 1,6 die Abstandswerte einen im Wesentlichen hyperbelartigen, zeitlichen Verlauf aufweisen. Anhand des zeitlichen Verlaufs der Abstandswerte von einem der beiden Sensoren 2,3 kann vorteilhafterweise die Position des anderen Fahrzeugs 6 bestimmt werden. Aus den zeitlichen Verläufen der beiden Sensoren 2,3 gemeinsam kann vorteilhafterweise zudem die relative Geschwindigkeit des anderen Fahrzeugs 6 zu dem Fahrzeug 1 bestimmt werden. Insbesondere kann aus Verhältnis von dem Abstand x zwischen dem ersten 2 und zweiten 3 Sensor zu der Zeitdifferenz zwischen dem Zeitpunkt T₁ₘᵢₙ, an dem ein minimaler Abstand D₁ₘᵢₙ zum ersten Sensor 2 detektiert wurde, und dem Zeitpunkt T₂ₘᵢₙ) an dem ein minimaler Abstand D₂ₘᵢₙ zum zweiten Sensor 3 detektiert wurde, bestimmt, insbesondere berechnet, werden.

## Patentansprüche

1. Fahrerassistenzverfahren für ein Fahrzeug (1) mit einer Sensoranordnung (2,3) umfassend mindestens einen ersten (2) und einen zweiten (3), einen Detektionsraum (4,5) seitlich des Fahrzeugs (1) erfassenden, abstandsmessenden Sensor zur Detektion von seitlichen Objekten (6), wobei der erste (2) und der zweite (3) Sensor in Fahrtrichtung (7) hintereinander an einer Seite des Fahrzeugs (1) angeordnet sind, wobei ein Sensor (2,3) im vorderen Bereich und ein Sensor (2,3) im hinteren Bereich des Fahrzeugs (1) angeordnet ist, umfassend die Verfahrensschritte:
a) Detektieren eines seitlichen Objektes (6) durch den ersten Sensor (2),
b) Detektieren des Objektes (6) durch den zweiten Sensor (3),
c) Überprüfen, ob das Objekt (6) den Detektionsraum (5) des zweiten Sensors (3) wieder verlassen hat,
d1) Verwerfen der, von dem ersten (2) und zweiten (3) Sensor gemessenen Abstandsdaten, insofern das Objekt (6) den Detektionsraum (5) des zweiten Sensors (3) wieder verlassen hat, oder
d2) Bestimmen der Position und/oder der relativen Geschwindigkeit des Objektes (6) aus gemessenen Abstandsdaten, insofern das Objekt (6) den Detektionsraum (5) des zweiten Sensors (3) nicht wieder verlassen hat,
e) Speichern der in Verfahrensschritt d2) bestimmten Position des Objektes (6) und/oder der in Verfahrensschritt d2) bestimmten relativen Geschwindigkeit des Objektes (6),
f) Berechnen des Abstands des Fahrzeugs (1) zu dem Objekt (6) aus der in Verfahrensschritt e) gespeicherten Position des Objektes (6) und/oder der relativen Geschwindigkeit des Objektes (6) zu dem Fahrzeug (1) und der Außenkontur des Fahrzeugs (1) und der aktuellen Position des Fahrzeugs (1) und/oder der aktuellen Trajektorie des Fahrzeugs (1),
g) Ausgeben eine Kollisionswarnung an den Fahrer und/oder Ausgeben eines Fahrhinweises zur Kollisionsvermeidung an den Fahrer und/oder
Automatisches Ändern und/oder Unterbrechen der Fahrzeugbewegung zur Kollisionsvermeidung,
insofern der in Verfahrensschritt f) berechnete Abstand einen Minimalwert (dₘᵢₙ) unterschreitet.

2. Fahrerassistenzverfahren nach Anspruch 1, **dadurch gekennzeichnet, dass** das Verfahren nach dem Verfahrensschritt a) und/oder b) den Verfahrensschritt:
c0) Speichern der von dem ersten Sensor (2) und/oder dem zweiten Sensor (3) gemessenen Abstandsdaten,
umfasst, wobei die gespeicherten Abstandsdaten entweder in Verfahrensschritt d1) wieder gelöscht werden, oder in Verfahrens d2) zumindest teilweise zur Bestimmung der Position des Objektes (6) verwendet werden.

3. Fahrerassistenzverfahren nach Anspruch 1 oder 2, **dadurch gekennzeichnet, dass** in Verfahrensschritt d2) die Position des Objekts (6) aus Abstandsdaten bestimmt wird, welche während des Vorbeifahrens des Fahrzeugs (1) an dem Objekt (6) mit einem der Sensoren (2,3) gemessenen wurden und/oder welche während des Stillstands oder des Vorbeifahrens des Fahrzeugs (1) an dem Objekt (6) von dem ersten (2) und dem zweiten (3) Sensor gemessen wurden.

4. Fahrerassistenzverfahren nach einem der Ansprüche 1 bis 3, **dadurch gekennzeichnet, dass** in Verfahrensschritt d2) die Position des Objektes (6) anhand des zeitlichen Verlaufs der, von dem ersten (2) und/oder zweiten (3) Sensor gemessenen Abstandswerte bestimmt wird.

5. Fahrerassistenzverfahren nach Anspruch 4, **dadurch gekennzeichnet, dass** in Verfahrensschritt d2) weiterhin die Geschwindigkeit des Objektes (6) aus dem Verhältnis von dem Abstand (x) zwischen dem ersten (2) und zweiten (3) Sensor zu der Zeitdifferenz zwischen dem Zeitpunkt (T₁ₘᵢₙ), an dem ein minimaler Abstand (D₁ₘᵢₙ) zum ersten Sensor (2) detektiert wurde, und dem Zeitpunkt (T₂ₘᵢₙ), an dem ein minimaler Abstand (D₂ₘᵢₙ) zum zweiten Sensor (3) detektiert wurde, bestimmt wird.

6. Fahrerassistenzverfahren nach einem der Ansprüche 1 bis 5, **dadurch gekennzeichnet, dass** die Sensoranordnung (2,3,2',3') mindestens einen weiteren ersten (2') und einen weiteren zweiten (3'), einen Detektionsraum (4',5') seitlich des Fahrzeugs (1) erfassenden, abstandsmessenden Sensor zur Detektion von seitlichen Objekten (6) umfasst, wobei der weitere erste (2') und der weiter zweite (3') Sensor spiegelbildlich zu dem ersten (2) beziehungsweise zweiten (3) Sensor an der anderen Seiten des Fahrzeugs (1) angeordneten ist.

7. Fahrerassistenzverfahren nach einem der Ansprüche 1 bis 6, **dadurch gekennzeichnet, dass** die Sensoren (2,3,2',3') Ultraschallsensoren sind.

## Claims

1. Driver assistance method for a vehicle (1) having a sensor arrangement (2, 3) comprising at least a first (2) and a second (3) distance-measuring sensor, which senses a detection space (4, 5) at the side of the vehicle (1), for detecting objects (6) at the side, wherein the first (2) and second (3) sensors are arranged successively in the direction of travel (7) on one side of the vehicle (1), wherein one sensor (2, 3) is arranged in the front area and one sensor (2, 3) is arranged in the rear area of the vehicle (1), comprising method steps:
a) detection of an object (6) at the side by the first sensor (2),
b) detection of the object (6) by the second sensor (3),
c) checking of whether the object (6) has left the detection space (5) of the second sensor (3) again,
d1) rejection of the distance data measured by the first (2) and second (3) sensors in so far as the object (6) has left the detection space (5) of the second sensor (3) again, or
d2) determination of the position and/or the relative speed of the object (6) from measured distance data in so far as the object (6) has not left the detection space (5) of the second sensor (3) again,
e) storage of the position of the object (6) determined in method step d2) and/or of the relative speed of the object (6) determined in method step d2),
f) computation of the distance of the vehicle (1) from the object (6) from the positon of the object (6) stored in method step e) and/or the relative speed of the object (6) in relation to the vehicle (1) and the outer contour of the vehicle (1) and the current position of the vehicle (1) and/or the current trajectory of the vehicle (1),
g) output of a collision warning to the driver and/or output of a driving instruction to avoid a collision to the driver and/or
automatic changing and/or interruption of the vehicle motion to avoid a collision,
in so far as the distance computed in method step f) is below a minimum value (dₘᵢₙ).

2. Driver assistance method according to Claim 1, **characterized in that** the method according to method step a) and/or b) comprises method step:
c0) storage of the distance data measured by the first sensor (2) and/or the second sensor (3),
wherein the stored distance data are either erased again in method step d1) or used at least in part to determine the position of the object (6) in method step d2).

3. Driver assistance method according to Claim 1 or 2, **characterized in that** method step d2) involves the position of the object (6) being determined from distance data that have been measured using one of the sensors (2, 3) as the vehicle (1) travelled past the object (6) and/or that have been measured by the first (2) and second (3) sensors as the vehicle (1) was at a standstill or travelled past the object (6).

4. Driver assistance method according to one of Claims 1 to 3, **characterized in that** method step d2) involves the position of the object (6) being determined on the basis of the temporal profile of the distance values measured by the first (2) and/or second (3) sensor.

5. Driver assistance method according to Claim 4, **characterized in that** method step d2) additionally involves the speed of the object (6) being determined from the ratio of the distance (x) between the first (2) and second (3) sensors to the time difference between the instant (T₁ₘᵢₙ) at which a minimum distance (D₁ₘᵢₙ) from the first sensor (2) was detected and the instant (T₂ₘᵢₙ) at which a minimum distance (D₂ₘᵢₙ) from the second sensor (3) was detected.

6. Driver assistance method according to one of Claims 1 to 5, **characterized in that** the sensor arrangement (2, 3, 2', 3') comprises at least a further first (2') and a further second (3') distance-measuring sensor, which senses a detection space (4', 5') at the side of the vehicle (1), for detecting objects (6) at the side, wherein the further first (2') and further second (3') sensors are arranged in mirror-image fashion in relation to the first (2) and second (3) sensors on the other side of the vehicle (1).

7. Driver assistance method according to Claims 1 to 6, **characterized in that** the sensors (2, 3, 2', 3') are ultrasonic sensors.

## Revendications

1. Procédé d'assistance au conducteur destiné à un véhicule (1) comportant un système de capteur (2, 3), comprenant au moins des premier (2) et deuxième (3) capteurs de mesure de distance détectant un espace de détection (4, 5) sur le côté du véhicule (1), pour détecter des objets latéraux (6), dans lequel les premier (2) et deuxième (3) capteurs sont disposés consécutivement dans la direction de déplacement (7) sur un côté du véhicule (1), dans lequel un capteur (2, 3) est disposé dans la région avant et un capteur (2, 3) est disposé dans la région arrière du véhicule (1), comprenant les étapes de procédé consistant à:
a) détecter un objet latéral (6) par l'intermédiaire du premier capteur (2),
b) détecter l'objet (6) par l'intermédiaire du deuxième capteur (3),
c) vérifier si l'objet (6) a de nouveau quitté l'espace de détection (5) du deuxième capteur (3),
d1) rejeter les données de distance mesurées par les premier (2) et deuxième (3) capteurs dans le cas où l'objet (6) a de nouveau quitté l'espace de détection (5) du deuxième capteur (3), ou
d2) déterminer la position et/ou la vitesse relative de l'objet (6) à partir des données de distance mesurées lorsque l'objet (6) n'a pas de nouveau quitté de l'espace de détection (5) du deuxième capteur (3),
e) stoker la position de l'objet (6) déterminée lors de l'étape de procédé d2) et/ou la vitesse relative de l'objet (6) déterminée lors de l'étape d2),
f) calculer la distance du véhicule (1) à l'objet (6) à partir de la position de l'objet (6) stockée lors de l'étape de procédé e) et/ou de la vitesse relative de l'objet (6) par rapport au véhicule (1) et du contour extérieur du véhicule (1) et de la position actuelle du véhicule (1) et/ou de la trajectoire actuelle du véhicule (1),
g) délivrer au conducteur une alarme de collision et/ou délivrer au conducteur une instruction de conduite pour éviter une collision et/ou modifier et/ou interrompre automatiquement le déplacement du véhicule afin d'éviter une collision,
dans le cas où la distance calculée lors de l'étape de procédé f) s'abaisse en dessous d'une valeur minimale (dₘᵢₙ).

2. Procédé d'assistance au conducteur selon la revendication 1, **caractérisé en ce que** le procédé, après l'étape de procédé a) et/ou b), comprend l'étape de procédé consistant à :
c0) stocker les données de distance mesurées par le premier capteur (2) et/ou par le deuxième capteur (3),
dans lequel les données de distance stockées sont soit de nouveau effacées lors de l'étape de procédé d1), soit sont utilisées au moins partiellement lors de l'étape de procédé d2) pour déterminer la position de l'objet (6).

3. Procédé d'assistance au conducteur selon la revendication 1 ou 2, **caractérisé en ce que**, lors de l'étape de procédé d2), la position de l'objet (6) est déterminée à partir de données de distance qui ont été mesurées pendant le passage du véhicule (1) au niveau de l'objet (6) à l'aide de l'un des capteurs (2, 3) et/ou qui ont été mesurées pendant l'arrêt ou le passage du véhicule (1) au niveau de l'objet (6) par les premier (2) et deuxième (3) capteurs.

4. Procédé d'assistance au conducteur selon l'une quelconque des revendications 1 à 3, **caractérisé en ce que**, lors de l'étape de procédé d2), la position de l'objet (6) est déterminée sur la base de l'évolution temporelle des valeurs de distance mesurées par le premier (2) et/ou le deuxième (3) capteur.

5. Procédé d'assistance au conducteur selon la revendication 4, **caractérisé en ce que**, lors de l'étape de procédé d2), la vitesse de l'objet (6) est en outre déterminée à partir du rapport de la distance (x) entre les premier (2) et deuxième (3) capteurs à la différence de temps entre l'instant (T₁ₘᵢₙ) lors duquel la distance minimale (D₁ₘᵢₙ) au premier capteur (2) a été détectée, et l'instant (T₂ₘᵢₙ) lors duquel une distance minimale (D₂ₘᵢₙ) au deuxième capteur (3) a été détectée.

6. Procédé d'assistance au conducteur selon l'une quelconque des revendications 1 à 5, **caractérisé en ce que** le système de capteurs (2, 3, 2', 3') comprend au moins un autre premier capteur (2') et un autre deuxième capteur (3') de mesure de distance détectant un espace de détection (4', 5') sur le côté du véhicule (1), pour détecter des objets latéraux (6), dans lequel l'autre premier capteur (2') et l'autre deuxième capteur (3') sont disposés de l'autre côté du véhicule (1) à la façon d'une image dans un miroir par rapport au premier capteur (2) ou au deuxième capteur (3).

7. Procédé d'assistance au conducteur selon l'une quelconque des revendications 1 à 6, **caractérisé en ce que** les capteurs (2, 3, 2', 3') sont des capteurs à ultrasons.
